# FASCICULE DE BREVET EUROPEEN

(11) **EP 1 487 569 B1**
(45) Date de publication et mention de la délivrance du brevet: **19.05.2010**
(21) Numéro de dépôt: 03740536.2
(22) Date de dépôt: 27.03.2003
(51) Int. Cl.: B01J 13/16

(54) **PROCEDE POUR LA PREPARATION DE CAPSULES COMPOSITES BIOCOMPATIBLES**
VERFAHREN ZUR HERSTELLUNG VON BIO-COMPATIBEL ZUSAMMENGESETZTEN MIKROKAPSELN
PROCESS FOR MAKING BIOCOMPATIBLE COMPOSITE CAPSULES

(30) Priorité: 28.03.2002 FR 0203939
(43) Date de publication de la demande: 22.12.2004
(73) Titulaire: CENTRE NATIONAL DE LA RECHERCHE SCIENTIFIQUE (CNRS), 75016 Paris (FR)
(72) Inventeur: FRERE, Yves, F-67810 Holtzheim (FR); DANICHER, Louis, F-67200 Strasbourg (FR)
(74) Mandataire: Colombet, Alain André
(86) Numéro de dépôt international: PCT/FR2003/000975
(87) Numéro de publication internationale: WO 2003/082459

(56) Documents cités:
- EP-A- 0 865 819
- US-A- 6 068 857
- US-B1- 6 183 783

## Description

La présente invention concerne un procédé de préparation de capsules composites biocompatibles, ainsi que leurs utilisations, en particulier, dans les domaines thérapeutique, biomédical, pharmaceutique, vétérinaire, paramédical, phytosanitaire et en cosmétique.

Dans de très nombreux domaines industriels, comme par exemple l'industrie pharmaceutique (tant thérapeutique que vétérinaire), la cosmétique, mais aussi pour les produits phytosanitaires (par exemple produits agrochimiques et lessiviels) et de l'imprimerie (encres), pour ne citer que certains d'entre eux, il est de plus en plus recherché de pouvoir isoler une substance active du milieu qui l'environne (on parle alors de rétention de la matière active) afin de promouvoir une meilleure conservation et/ou une libération différée, retardée ou prolongée ou encore une vectorisation de la dite substance active.

Les techniques de rétention de substances actives sont des méthodes qui consistent à préparer des particules individualisées constituées d'un matériau enrobant la dite substance. Ces particules présentent des tailles comprises entre quelques nanomètres et quelques millimètres. Parmi celles-ci figurent des particules réservoirs constituées d'une membrane solide continue qui enveloppe un coeur rempli de matière active. Ces particules réservoirs sont dénommées capsules.

Le terme "produit encapsulé" indique qu'un produit, désigné en général par "substance active", c'est-à-dire le principe actif thérapeutique, vétérinaire, agrochimique, le produit cosmétique ou le produit lessiviel ou encore l'encre d'imprimerie, est enfermé, à l'état solide ou liquide voire gazeux, seul ou en combinaison avec des agents de formulation, dans un corps creux, la capsule, afin de l'isoler du milieu extérieur.

La capsule est donc généralement constituée d'une membrane dont le rôle est, d'une part d'isoler la substance active du milieu extérieur, et d'autre part de permettre une meilleure conservation de la dite substance active, une vectorisation et/ou une libération immédiate, prolongée, retardée et/ou contrôlée de cette substance active encapsulée.

De nombreuses techniques d'encapsulation sont déjà connues et notamment la synthèse de capsules par enrobage ou coacervation, technique faisant appel à l'utilisation d'un polymère comme agent d'enrobage avec les limites de solubilité propre à celui-ci (cf. US 2,800,457).

Le brevet US 6,183,783, par exemple, divulgue un procédé de préparation de microcapsules contenant une substance active revêtue d'un film polymère substantiellement polaire. Le procédé de formation de la capsule utilise la méthode classique de coacervation en milieu solvant organique. Ce solvant organique est ensuite éliminé par plusieurs cycles d'extraction au dioxyde de carbone supercritique. Ce procédé présente de nombreux inconvénients et en particulier celui de procéder à de nombreuses extractions de solvant et à la nécessité de recycler celui-ci. En outre, les capsules issues de cette technique par coacervation comportent une membrane sous forme de film polymère continu, isolant la substance active par un effet barrière qui ralentit la détérioration de la couche de revêtement et par conséquent la diffusion de la substance active.

D'autres techniques font appel à la polymérisation en émulsion, généralement de particules de latex de diamètre inférieur au micron. L'inconvénient de cette méthode réside principalement dans le fait que la structure des particules obtenues est difficilement contrôlable, voire non contrôlable.

D'autres techniques encore, telles que la synthèse de particules pleines, la synthèse de vésicules, ou encore la synthèse de capsules par lit fluidisé, par enrobage ou par "spraying" sont également employées dans l'industrie.

Une autre technique, enfin, fait appel à la technique de polycondensation interfaciale en milieu dispersé, technique divulguée, par exemple par P. W. Morgan et coll., J. Polym. Sci., 40, (1959), 299-327, pour la synthèse de films plans. Cette technique a été adaptée à la synthèse de minicapsules (R. Arshady, J. Microencap., 6(1), (1989), 1-10 et 13-28).

L'ensemble de ces techniques, et en particulier celles qui donnent les meilleurs résultats comme par exemple la polycondensation interfaciale, utilise généralement, lors de la synthèse des dites capsules, des solvants organiques. Or, pour des applications en thérapeutique humaine ou vétérinaire, dans le domaine phytosanitaire ou en cosmétique, de tels solvants organiques peuvent s'avérer insuffisamment biocompatibles et même dans certains cas toxiques.

En plus des solvants organiques, les techniques d'encapsulation employées imposent bien souvent la nature du polymère constitutif de la membrane, polymère qui s'avère très souvent peu ou non biocompatible.

Par ailleurs, et par exemple pour des usages dans les domaines médical et paramédical, il est indispensable de disposer de capsules ayant toutes sensiblement la même taille, ou tout au moins présenter un volume d'encapsulation substantiellement identique pour toutes les capsules. Il est en effet préférable, dans de telles applications, que pour un volume de capsules donné, la dose de substance active encapsulée soit la plus constante possible.

Enfin, et en plus de la biocompatibilité des capsules, la membrane doit permettre une libération de la substance encapsulée, cette libération pouvant résulter soit de la rupture, c'est-à-dire de la destruction physique et/ou chimique et/ou biologique de la membrane, soit de la perméabilité de la membrane à la dite substance active.

Ainsi les désavantages liés à la faible biocompatibilité, voire au manque de compatibilité, ou encore à la toxicité, associées ou non à la difficulté de contrôler la structure des capsules et aux propriétés intrinsèques des membranes, font qu'aujourd'hui il n'existe que peu de produits encapsulés par polycondensation interfaciale en milieu dispersé dans les domaines médical et paramédical disponibles sur le marché.

Il existe cependant des substances actives très efficaces pour un très grand nombre d'utilisations, en particulier dans les domaines médical et paramédical, dont l'efficacité ne peut être précisément et efficacement révélée et/ou contrôlée que lorsque le principe actif est convenablement vectorisé, libéré, de manière retardée, prolongée, et/ou contrôlée, c'est-à-dire lorsque la substance active est encapsulée.

En particulier, pour ces applications en thérapeutique humaine ou animale, ou encore dans les domaines phytosanitaire et cosmétique, il existe un besoin urgent et important de proposer de nouvelles méthodes d'encapsulation qui puissent s'affranchir des inconvénients liés aux méthodes d'encapsulation de l'art antérieur telles que définies ci-dessus.

Un premier objectif de l'invention consiste à proposer un procédé de préparation de capsules biocompatibles, c'est-à-dire compatibles et non toxiques pour le milieu vivant, et notamment pour l'homme, les animaux et les plantes.

Un autre objectif de l'invention est de fournir un procédé de préparation de capsules biocompatibles permettant de contrôler la structure de la membrane et les caractéristiques desdites capsules, en particulier la taille.

Selon un autre objectif, le procédé de préparation de capsules biocompatibles selon l'invention doit permettre d'obtenir des capsules présentant une tenue mécanique adaptée aux usages auxquelles elles sont destinées.

Comme autre objectif de la présente invention, il est proposé un procédé de préparation de capsules biocompatibles mettant en oeuvre un polymère constitutif de la membrane dont les propriétés physico-chimiques permettent une libération retardée, prolongée et/ou retardée de la substance active encapsulée.

D'autres objectifs encore, en plus de ceux exposés ci-dessus, apparaîtront dans l'exposé de l'invention qui suit.

Ainsi, selon un premier aspect, la présente invention concerne un procédé de préparation de capsules composites par polycondensation interfaciale en milieu dispersé d'au moins deux monomères différents M₁ et M₂, caractérisé en ce que la dite polycondensation est réalisée dans un gaz à l'état liquide et/ou supercritique.

Le procédé de préparation retenu pour la synthèse des capsules biocompatibles de la présente invention est la technique de polycondensation interfaciale. Cette méthode permet un contrôle optimal de la taille des capsules, mais aussi du degré d'avancement de la polymérisation. En outre, cette méthode offre une souplesse dans le choix des constituants de la membrane, souplesse beaucoup plus importante qu'avec, par exemple, la technique de coacervation.

En effet, le procédé de polycondensation à l'interface de deux liquides consiste, d'une manière générale, à créer une dispersion d'un liquide dans un autre. Les deux liquides doivent être substantiellement non miscibles entre eux, tels qu'un liquide lipophobe et un liquide lipophile, par exemple une phase aqueuse et une phase organique, formant ainsi une phase continue (ou phase dispersante) et une phase dispersée.

On parlera de système direct lorsque la phase organique est dispersée dans la phase aqueuse (dispersion de type huile-dans-eau) et de système inverse lorsque la phase aqueuse est dispersée dans la phase organique (dispersion de type eau-dans-huile).

Le choix entre système direct et système inverse est principalement guidé par la nature de la substance active que l'on désire encapsuler. Ainsi, pour des principes actifs liposolubles, on préfère avantageusement réaliser une dispersion en système direct. En revanche, pour des principes actifs hydrosolubles, la dispersion en système inverse est favorable. Bien entendu, l'utilisation de l'un ou l'autre des systèmes pourra varier selon la nature intrinsèque des principes actifs à encapsuler.

Les membranes des capsules sont donc formées par polycondensation d'au moins deux monomères dont un est soluble dans la phase dispersante et un autre soluble dans la phase dispersée.

Ainsi, pour former les capsules, une solution comprenant un monomère M₁ dissous dans un solvant S₁ est dispersée dans une solution comprenant un solvant S₂ ne contenant pas d'espèces réactives. Une fois la solution dispersée et stabilisée, le monomère M₂, soluble dans S₂, de la phase dispersante est ajouté. La réaction de condensation entre M₁ et M₂, éventuellement catalysée, se produit à l'interface de la phase dispersante et de la phase dispersée. On parle alors de polycondensation interfaciale. Le rapport volumique entre phase dispersante et phase dispersée est généralement compris entre 1/10 et 10/1.

Plus spécifiquement, le procédé de la présente invention comprend les étapes suivantes :
a) ajouter à une solution comprenant un solvant S₂, une solution d'au moins un monomère M₁ dans un solvant S₁ contenant la substance à encapsuler, sous agitation, afin d'obtenir une dispersion stabilisée, S₁ ou S₂ étant un gaz à l'état liquide et/ou supercritique ;
b) ajouter à cette dispersion une solution comprenant au moins un monomère M₂ contenu dans une quantité minimum de S₂ ;
c) réaliser la polymérisation par polycondensation à l'interface des deux liquides ;
d) éliminer le gaz présent dans le milieu réactionnel ; et
e) extraire les capsules du milieu réactionnel.

Comme il a été dit auparavant, le principe de la polycondensation interfaciale consiste à effectuer une dispersion d'une solution dans une autre, les deux solutions étant non miscibles entre elles. Ainsi, S₁ est un solvant pour M₁, mais n'est pas soluble dans S₂ qui est un solvant de M₂. Si S₁ est le solvant de la phase lipophobe, on aura une dispersion de S₁ dans S₂, c'est-à-dire de type eau-dans-huile (système inverse). À l'inverse, si S₁ est le solvant de la phase lipophile, on aura une dispersion de type huile-dans-eau (système direct).

Le procédé préféré de la présente invention est de type système inverse, et, dans ce cas le solvant S₁ est avantageusement l'eau et le solvant S₂ est le gaz à l'état liquide et/ou supercritique. Préférentiellement, le gaz est placé dans des conditions de température et de pression telles qu'il soit à l'état liquide, pendant toute la durée de la synthèse.

Une alternative consiste à préparer la dispersion dans des conditions de température et de pression où le gaz est à l'état liquide, puis de modifier ces conditions pour réaliser la réaction de polycondensation dans le gaz à l'état supercritique.

Dans le procédé de la présente invention, il est recommandé que la dispersion obtenue à l'étape a) soit stable, c'est-à-dire que le milieu réactionnel ne subisse pas de démixtion, de séparation, de décantation, etc. À cet effet, il est avantageux d'utiliser un agent tensioactif, qui peut être de tout type, ionique ou non ionique, et dont la caractéristique est de s'adsorber spontanément à l'interface des deux liquides.

De telles molécules adsorbées à l'interface forment une barrière stérique et/ou électrostatique empêchant ainsi la coalescence des gouttelettes puis des capsules en formation. De ce fait, l'agent tensioactif stabilisant la dispersion prévient l'agglomération entre elles des capsules, une fois la phase de croissance de la membrane terminée.

La taille des capsules ainsi obtenues est directement liée à la taille des gouttelettes présentes dans la dispersion. La taille de ces dernières est elle-même influencée par de nombreux paramètres, dont les principaux sont la vitesse et la durée de la dispersion, la nature et la concentration du tensioactif utilisé, la nature, la viscosité et le rapport volumique de chacune des phases dispersantes et dispersées, et enfin, la température à la laquelle sont réalisées la dispersion et la réaction de polycondensation.

Grâce au contrôle des différents paramètres décrits ci-dessus, il est ainsi possible d'obtenir des particules dont la taille est substantiellement uniforme. La taille des capsules peut par conséquent être contrôlée de manière à ce que le diamètre moyen soit substantiellement constant, avec une dispersité relativement faible.

Ainsi, et selon les conditions opératoires définies plus haut, le procédé de la présente invention permet la préparation des capsules de tailles comprises entre quelques nanomètres et quelques millimètres. Dans la présente invention, on parlera de nanocapsules lorsque leur diamètre extérieur moyen est compris entre environ 0,01 µm et environ 0,9 µm, de microcapsules lorsque le diamètre moyen est compris entre environ 1 µm et environ 50 µm, de minicapsules pour un diamètre moyen compris entre environ 50 µm et environ 500 µm et de millicapsules pour des valeurs de diamètre moyen compris entre environ 0,5 mm et environ 5 mm.

Le procédé selon la présente invention est particulièrement adapté pour la synthèse de nanocapsules, de microcapsules et de minicapsules, c'est-à-dire pour la préparation de capsules ayant un diamètre extérieur moyen compris entre environ 0,01 µm et environ 500 µm, de préférence entre environ 0,05 µm et environ 300 µm. Pour des usages dans les domaines médical et paramédical, on utilisera avantageusement les nanocapsules, les microcapsules et les minicapsules, et notamment ayant un diamètre extérieur moyen compris entre environ 0,01 µm et environ 500 µm, de préférence entre environ 0,05 µm et environ 300 µm.

Les inventeurs ont maintenant découvert et mis au point un procédé de préparation de capsules composites biocompatibles par polycondensation interfaciale en milieu dispersé, dans lequel le solvant de la phase organique est un gaz à l'état liquide ou supercritique ou bien liquide puis supercritique.

Il convient de préciser ici que le terme "biocompatible" qualifie des entités qui, lorsqu'elles sont introduites ou pénètrent à l'intérieur d'un organisme vivant, n'engendrent pas d'effets négatifs sur celui-ci, et sont ensuite éliminées, métabolisées et/ou assimilées par le dit organisme. Le terme "biocompatible" inclut également les entités dont les produits de dégradation au sein de l'organisme vivant, tels que les métabolites, sont également biocompatibles.

D'une manière générale, les réactions de polycondensation interfaciale en milieu dispersé nécessitent l'emploi de deux solvants, substantiellement non miscibles entre eux. L'eau, qui ne présente généralement pas de toxicité, est habituellement utilisée comme solvant de la phase lipophobe. L'eau brute peut être utilisée, mais l'eau distillée, permutée, stérilisée ou déionisée par passage sur résine échangeuse d'ions sera préférée cependant.

En revanche, le solvant de la phase organique, généralement choisi parmi les solvants usuels, tels que le toluène, le cyclohexane, le tétrachlorure de carbone, le chloroforme, etc., présente le plus souvent une toxicité plus ou moins prononcée, totalement inacceptable pour des usages médicaux ou paramédicaux.

Il a donc été nécessaire de trouver un solvant organique qui puisse avoir les propriétés requises et nécessaires pour être utilisé dans des réactions de polycondensation interfaciale en milieu dispersé et qui soit non toxique pour le milieu vivant, c'est-à-dire qui soit biocompatible.

Une solution particulièrement adaptée consiste à effectuer la réaction de polycondensation interfaciale à l'aide d'un solvant organique possédant les propriétés de solvatation requises pour une telle réaction, et qui puisse être facilement éliminé en fin de réaction. Un type de solvant tout à fait adapté est un solvant gazeux qui peut être amené à l'état liquide et/ou supercritque pendant la réaction de polycondensation interfaciale. Après la réaction et retour aux conditions normales de température et de pression, le dit solvant est ainsi éliminé sous forme de gaz.

Ainsi, les solvants appropriés pour la réaction de polycondensation interfaciale selon la présente invention comprennent tous les composés gazeux possédant les propriétés de solvatation requises pour une telle réaction, inertes vis-à-vis de la réaction de polycondensation interfaciale proprement dite, et se présentant sous forme liquide ou supercritique dans des conditions de température et/ou de pression spécifiques.

De tels composés gazeux sont par exemple l'air, l'oxygène, l'azote, le protoxyde d'azote, le dioxyde de carbone, les gaz rares, les hydrocarbures halogénés ou non, par exemple le propane, le butane, les composés fluorocarbonés et autres. Comme indiqués plus haut, ces composés sont gazeux dans les conditions normales de température et de pression. Des mélanges en toutes proportions de ces composés peuvent également être utilisés. Un composé gazeux tout particulièrement préféré est le dioxyde de carbone.

De plus, et dans l'optique d'une utilisation des capsules biocompatibles selon la présente invention dans les domaines thérapeutique, vétérinaire, et en général dans tous les domaines relatifs à la santé humaine, animale ou végétale, on utilisera avantageusement des composés gazeux non toxiques, c'est-à-dire non toxiques pour l'homme, les animaux et/ou les plantes.

En effet, le dioxyde de carbone est un solvant organique très peu utilisé en tant que tel mais qui présente cependant les avantages recherchés. Le dioxyde de carbone est en effet plus ou moins inerte vis-à-vis des réactifs, ininflammable, peu onéreux, et facilement disponible en grandes quantités. De plus, le dioxyde de carbone est un fluide présentant la possibilité d'être manipulé à l'état liquide, à des températures relativement basses, et possède la particularité de se présenter, à l'état supercritique, à des températures et des pressions peu élevées.

Enfin, le dioxyde de carbone présente, dans ces conditions d'utilisation, une non-toxicité pour l'homme, les animaux et les plantes, ce qui le rend tout à fait approprié pour la préparation de capsules utilisables dans les domaines relatifs à la santé humaine, animale ou végétale. Bien entendu, d'autres solvants gazeux connus pour se comporter comme le dioxyde de carbone peuvent être utilisés.

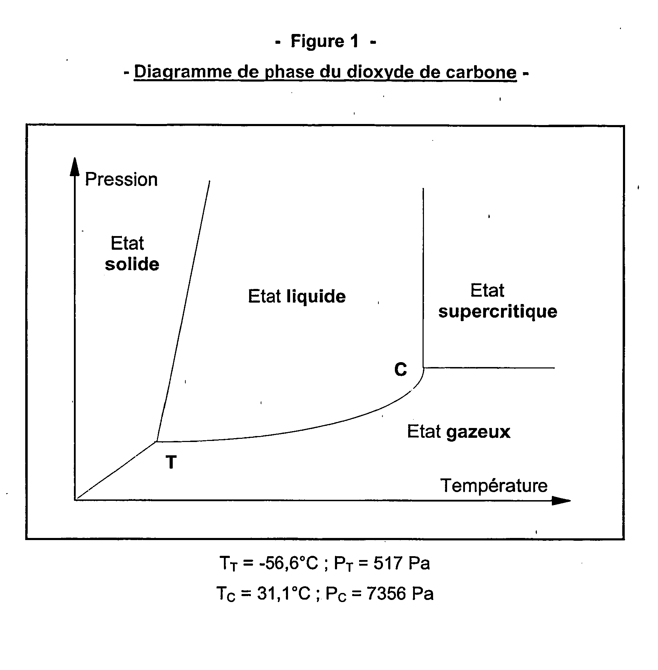

La Figure 1 présente le diagramme de phase du dioxyde de carbone. Le point T, à la limite des états solide, liquide et gazeux, est défini par sa température T_{T} et sa pression P_{T}, respectivement égales à -56,6°C et 517 Pa. Le point C, à la limite des états gazeux, liquide et supercritique, est défini par sa température T_{C} et sa pression P_{C}, respectivement égales à 31,1 °C et 7356 Pa.

Dans ses états liquide et supercritique, le dioxyde de carbone peut donc s'avérer être un solvant convenable de la phase organique lors de réaction de polycondensation interfaciale en milieu dispersé. À la fin de la réaction, il suffit de revenir dans les conditions normales de température et de pression, conditions dans lesquelles le dioxyde de carbone est à l'état gazeux, pour éliminer aisément ce solvant organique. Les capsules obtenues seront ainsi exemptes de solvant organique, généralement responsable de leur non-biocompatibilité.

Il reste cependant que l'emploi de dioxyde de carbone à l'état liquide ou supercritique impose de travailler à des pressions relativement élevées et à des températures variant d'environ -60°C jusqu'à environ 200°C. La réaction de polycondensation interfaciale selon l'invention sera par conséquent effectuée dans des appareillages étanches, résistant à de telles pressions et munis d'enveloppes à la fois chauffantes et réfrigérantes.

De plus, la densité du dioxyde de carbone liquide ou supercritique varie assez fortement avec la température et la pression. Des variations de densité entraînent des variations de tension de surface du dioxyde de carbone qui peuvent perturber voire rompre l'équilibre de la dispersion des deux phases organique et aqueuse. Il est donc nécessaire de contrôler la température ainsi que la pression tout au long de la synthèse des capsules et de les maintenir aussi constantes que possible.

La réaction de polycondensation interfaciale sera donc conduite dans les conditions de température et de pression correspondantes à celles de l'état liquide ou supercritique du solvant normalement gazeux dans lequel on désire mener la réaction. De manière préférée, la dispersion sera réalisée dans un solvant normalement gazeux à l'état liquide, de préférence le dioxyde de carbone à l'état liquide. La réaction de polycondensation proprement dite pourra alors être effectuée soit dans un solvant normalement gazeux, à l'état liquide, de préférence le dioxyde de carbone à l'état liquide, soit, en modifiant la température et/ou la pression, en milieu supercritique.

Comme il vient d'être dit, la dispersion comme la réaction de polycondensation elle-même peuvent être réalisées à des températures et des pressions variant dans de grandes proportions, pour autant que le solvant normalement gazeux se trouve dans l'état souhaité, et dans les limites de résistance de l'appareillage utilisé. À titre d'exemple, la réaction de polycondensation peut être réalisée à une température voisine de 60°C et sous une pression de 15 MPa, lorsque du dioxyde de carbone est employé.

À l'état liquide ou supercritique, le dioxyde de carbone est donc un solvant adapté à la synthèse de capsules par polycondensation interfaciale en milieu dispersé. Comme indiqué précédemment, l'emploi d'un agent tensioactif est nécessaire pour stabiliser la dispersion avant d'effectuer la réaction de polycondensation interfaciale. En particulier, lorsque le solvant normalement gazeux utilisé est le dioxyde de carbone à l'état liquide ou à l'état supercritique, il peut s'avérer nécessaire d'employer des tensioactifs amphiphiles, spécifiques eau/dioxyde de carbone liquide ou eau/dioxyde de carbone supercritique.

De tels tensioactifs sont bien connus de l'homme du métier et peuvent avantageusement être choisis parmi les composés à chaînes polyfluorées. La nature du tensioactif polyfluoré n'est toutefois pas importante, du moment que celui-ci soit soluble dans le dioxyde de carbone liquide ou supercritique et présente un pouvoir tensioactif appréciable. Il sera également choisi de préférence pour sa biocompatibilité, et surtout sa non toxicité pour le milieu vivant.

Un exemple particulièrement intéressant de tensioactif compatible avec le dioxyde de carbone est un composé à chaîne poly(oxyde de propylène) fluoré terminée par une fonction acide carboxylique. Ce composé est plus connu sous le nom de KRYTOX® 157 FSL de la société DuPont. Il peut être utilisé tel quel sous sa forme acide, ou sous forme de sels, par exemple de sodium ou d'ammonium, ou encore sous forme d'un colloïde, obtenu entre autres avec le poly(1,4-butanedioltoluènediisocyanate) (PBTDI).

Le procédé de préparation de capsules biocompatibles selon la présente invention est préférentiellement mis en oeuvre en utilisant l'eau comme solvant de la phase lipophobe et le dioxyde de carbone comme solvant de la phase lipophile. Bien entendu, les monomères M₁ et M₂ doivent être choisis de telle sorte qu'ils puissent réagir entre eux pour former un polycondensat et être solubles, l'un dans la phase lipophobe, l'autre dans la phase lipophile.

Les monomères M₁ et M₂ sont des monomères bi-fonctionnels, tri-fonctionnels ou polyfonctionnels, c'est-à-dire qu'ils comportent chacun au moins deux fonctions réactives, éventuellement différentes, de préférence identiques, par molécule. De manière avantageuse, les monomères M₁ et M₂ sont des monomères bi-fonctionnels, cette bi-fonctionnalité assurant la formation de polymères de haut poids moléculaire, particulièrement adaptés à la formation de capsule dans le système interfacial de l'invention.

La présence de monomères mono-fonctionnels peut réduire voire stopper la croissance des chaînes de polymère, avant qu'elles aient atteint la longueur adaptée à la formation des capsules. À l'inverse, des monomères poly-fonctionnalisés se comporteront comme des agents de réticulation, entraînant ainsi un accroissement très rapide de la masse moléculaire du polymère formé, la formation d'un réseau tridimensionnel et bien souvent la précipitation de la macromolécule.

De tels monomères monofonctionnels et polyfonctionnels peuvent toutefois être utilisés pour la synthèse des capsules de la présente invention. En particulier, des monomères polyfonctionnels pourront avantageusement être utilisés comme agent de réticulation, afin d'accélérer et/ou de promouvoir la formation de la membrane polymère.

De plus, afin de rester en adéquation avec le caractère biocompatible des capsules exposées ici, il est souhaitable que le copolymère obtenu par polycondensation des monomères M₁ et M₂, et qui forme la membrane des dites capsules, soit biocompatible et non toxique pour les usages auxquelles elles sont destinées. Cette même biocompatibilité devra également être observée pour les produits de dégradation du polymère, dégradation qui peut par exemple intervenir par dégradation chimique ou biochimique (métabolisation).

De tels polymères biocompatibles existent et sont commercialisés aujourd'hui. À titre d'exemples, on peut citer le PELLETHANE® (poly[éther-uréthanne]), le TECOFLEX® (poly[éther-uréthanne]), le BIOMER® (poly[éther-uréthanne-urée]) et le CARDIOTHANE® ou AVCOTHANE® (poly[éther-uréthanne] réticulé avec du polydiméthylsiloxane).

Le procédé de l'invention ne se limite toutefois pas aux monomères formant des polymères biocompatibles, bien que ceux-ci soient recommandés pour l'obtention de capsules "propres", c'est-à-dire biocompatibles et non-toxiques. On utilisera ainsi des monomères conduisant par exemple à des polymères choisis parmi les polyamides, les polyesters, les polyuréthannes, les polyurées et les poly(éther-uréthanne-urée)s, ainsi que leurs copolymères.

Bien entendu, il doit être compris que le terme "monomère" employé dans la présente invention comprend non seulement les monomères au sens propre, mais aussi les oligomères, télomères et autres, possédant des caractéristiques similaires à celles des monomères décrits ci-dessus et conduisant à des polymères constitutifs des membranes des capsules adaptés à la présente invention. Il peut être également envisagé d'utiliser des mélanges de monomères, oligomères, télomères et autres, ou encore de remplacer ou ajouter un monomère, oligomère, télomère ou autre, au cours de la réaction de polycondensation interfaciale.

Ces polymères, constitutifs de la membrane des capsules, peuvent par exemple être obtenus avec les couples de monomères suivants :

| ***Monomères "aqueux"'*** | ***Monomères "organiques"*** | ***Polymères*** |
|---|---|---|
| Diol | Dichlorure d'acide | Polyester |
| Diol | Diisocyanate | Polyuréthanne |
| Diol | Polyéther fonctionnalisé en diisocyanate | Poly(éther-uréthanne) |
| Diamine | Dichlorure d'acide | Polyamide |
| Diamine | Diisocyanate | Polyurée |
| Diamine | Polyéther fonctionnalisé en diisocyanate | Poly(éther-uréthanne-urée) |

Les monomères "aqueux" (c'est-à-dire hydrosolubles, ou encore solubles dans la phase lipophobe) et qui peuvent être avantageusement utilisés dans le cadre de la présente invention, sont par exemple choisis parmi les alcane-diols, comme le 1,4-butanediol ou le 1,5-pentanediol, les poly(oxydes d'éthylène glycol) (POEG) de diverses masses moléculaires, parmi les alcane-polyols, par exemple les alcane-triols tels que le triméthylolpropane, et parmi les di- ou les poly-amines, par exemple la 1,6-hexaméthylène diamine, la 1,2-éthylènediamine et la tri-(2-aminoéthyl)amine.

De manière non limitative, les monomères "organiques" (c'est-à-dire liposolubles, ou encore solubles dans la phase organique, ou encore solubles dans le dioxyde de carbone à l'état liquide et/ou supercritique) et qui peuvent être avantageusement utilisés dans le cadre de la présente invention, sont par exemple choisis parmi les diisocyanates, par exemple le méthylène diphénylisocyanate (MDI), le 4,4'-dicyclohexylméthanediisocyanate (H₁₂MDI), le toluènediisocyanate (TDI), le poly(1,4-butanedioltoluènediisocyanate) (PBTDI) et les polyisocyanates aliphatiques polyfonctionnels, par exemple le DESMODUR® N100 commercialisé par la société Bayer. Les monomères "organiques" peuvent être également des dichlorures d'acide, tels que le dichlorure de téréphtaloyle ou le dichlorure de sébacoyle.

La réaction de polycondensation peut également être effectuée en présence d'un ou plusieurs agents réticulants, avantageusement choisis parmi des monomères polyfonctionnels, de préférence trifonctionnels, par exemple le trichlorure de mésoyle.

Selon les caractéristiques des capsules que l'on souhaite préparer, il peut être avantageux de réaliser une polycondensation entre un ou plusieurs monomères "organiques" et un ou plusieurs monomères "aqueux". Les polycondensats ainsi obtenus seront des copolymères statistiques ou non de deux, trois, quatre ou plus monomères.

Pour les usages de la présente invention, on utilisera avantageusement un monomère "aqueux" de type diol et un monomère "organique" de type diisocyanate de manière à former des capsules dont la membrane sera essentiellement constituée de polyuréthanne.

Les réactions de polycondensation entre les monomères M₁ et M₂ définis ci-dessus peuvent éventuellement être accélérées sous l'action d'un ou plusieurs catalyseurs. La nature du catalyseur à employer est fonction de la nature des monomères qui doivent réagir entre eux et sont parfaitement connus de l'homme du métier spécialiste de la synthèse de macromolécules.

À titre d'exemple, pour une polycondensation entre un diol et un diisocyanate, il peut s'avérer avantageux d'accélérer la réaction de polycondensation à l'aide d'un composé à base d'étain, comme le KOSMOS® 29 (K29) de la société Goldschmidt, ou d'une diamine tertiaire, telle que le DABCO (1,4-diazabicyclo[2.2.2]octane) commercialisé par Aldrich, ces deux catalyseurs pouvant être utilisés conjointement. La diamine tertiaire est préférée au composé à base d'étain en raison de sa meilleure biocompatibilité, de sa plus faible toxicité, les quantités de catalyseur employées restant cependant très faibles.

Enfin, l'utilisation de co-solvants, que ce soit dans la phase aqueuse ou dans la phase organique (solvant gazeux tel que dioxyde de carbone) n'est pas exclue. De tels co-solvants peuvent être en effet nécessaires pour améliorer la solubilité des monomères dans l'eau ou dans le solvant à l'état liquide ou supercritique.

Le choix de tels co-solvants devra donc être effectué en fonction de la nature des monomères engagés dans la réaction de polycondensation interfaciale, et des éventuels tensioactifs et catalyseurs présents dans le milieu réactionnel. De plus, ces co-solvants devront avantageusement présenter le caractère de non-toxicité, et mieux de biocompatibilité, requis pour les usages définis dans la présente demande de brevet.

La capsule composite ainsi obtenue est constituée d'une membrane polymère résultant de la polycondensation des monomères définis précédemment, c'est-à-dire un polymère polyamide, polyester, polyuréthanne, polyurée, poly(éther-uréthanne) ou poly(éther-uréthanne-urée) ou encore un copolymère de ces polymères, et d'un coeur rempli de la ou des substances actives qui auront été préalablement introduites dans la phase dispersée.

La quantité de substance active encapsulée dépendra de la taille des capsules qui est généralement monodisperse. D'une manière générale, la quantité de substance active introduite dans la phase dispersée sera comprise entre environ 0,01 % et environ 99,9% en poids, par rapport au poids total des capsules, et ce, pour des capsules de taille comprise entre environ 0,01 µm et environ 5 mm de diamètre.

La limite de 0,01% indique la limite inférieure au-dessous de laquelle la quantité de substance active pourrait ne pas représenter une quantité efficace pour l'usage auquel la capsule est destinée. Toutefois, il peut être envisagé l'encapsulation de substances actives dans des quantités inférieures à cette limite.

Au-delà de 99,9% de substance active par rapport au poids total de la capsule, celle-ci pourrait ne plus présenter, pour certaines utilisations, une résistance mécanique suffisamment élevée, ou encore une membrane suffisamment solide. Ici encore, il peut être envisagé toutefois des capsules comprenant plus de 99,9% en poids de substance active par rapport au poids total de la capsule.

À l'issue de la réaction de polycondensation, les capsules sont récupérées après évaporation du solvant gazeux dans les conditions normales de température et de pression (par exemple le dioxyde de carbone), et lavées à l'eau. Les capsules peuvent être ensuite laissées dans l'eau ou bien encore séchées et/ou déshydratées voire lyophilisées pour être conservées.

Les substances actives pouvant être encapsulées peuvent être de toutes sortes et par exemple choisies parmi les principes actifs thérapeutiques à usage pharmaceutique ou vétérinaire, les principes actifs pour des usages en cosmétique, les substances actives du point de vue agrochimique, phytosanitaire, etc.

Il n'existe pas de limitation propre à la substance active pouvant être encapsulée selon le procédé de la présente invention. Généralement, la substance active est soluble dans la phase dispersée, cette solubilisation pouvant le cas échéant être facilitée en présence de co-solvants tels que définis précédemment. En outre, dans certains cas, la substance active peut être elle-même la phase dispersée contenant le monomère.

Les capsules composites obtenues selon le procédé de la présente invention se caractérisent par le fait qu'elles possèdent une membrane résultant de la polycondensation interfaciale d'au moins deux monomères, et dont le solvant utilisé à l'état liquide et/ou supercritique a été éliminé sous forme de gaz dans les conditions normales de température et de pression.

Les domaines d'applications de telles capsules biocompatibles permettant la libération retardée, différée, prolongée et/ou contrôlée, et/ou la vectorisation du ou des principes actifs qu'elles renferment, sont très variés, mais concernent surtout, de part leur caractère biocompatible, les domaines de la santé humaine et animale, phytosanitaire et de la cosmétique en général.

Ainsi les capsules composites biocompatibles obtenues selon le procédé de l'invention peuvent avantageusement être utilisées dans les domaines thérapeutique, biomédical, pharmaceutique, vétérinaire, paramédical, cosmétologique et phytosanitaire. À titre d'exemples, et de manière non limitative, les capsules peuvent ainsi être utilisées comme agent de vectorisation de principe actifs et assurent une libération rapide ou lente, retardée, prolongée et/ou contrôlée des dits principes actifs, selon la nature de la membrane, la nature du ou des substances actives encapsulées ainsi que la présence et la nature de différents adjuvants, charges, etc. pouvant entrer dans la composition de la dite capsule.

Plus précisément les capsules obtenues selon le procédé de l'invention pourront par exemple entrer dans la fabrication de produits pharmaceutiques, vétérinaires, cosmétologiques ou phytosanitaires, tels que comprimés, gélules, poudres, patches, gels, crèmes, onguents, mais aussi dans la fabrication de produits pour l'imagerie médicale (par exemple agent de contraste) ou de produits textiles dans le domaine médical et/ou paramédical.

La présente invention est décrite plus en détail dans les exemples particuliers de réalisation qui suivent. Ces exemples n'ont qu'un caractère purement illustratif et n'ont aucunement pour but de limiter l'invention de quelque manière que ce soit.

### Exemple 1 : Synthèse de minicapsules à membrane polyuréthanne obtenues par polycondensation interfaciale en milieu solvant organique classique

La réaction commence par la préparation de la phase dispersante, obtenue en dissolvant le tensioactif (HYPERMER® B261) dans 1 L de solvant organique (cyclohexane ou toluène), afin d'obtenir une concentration égale à 1 g.L⁻¹. Une partie (450 mL) de cette solution est introduite dans le réacteur muni d'un condenseur à boules. La solution est ensuite dégazée pendant 30 min par bullage d'azote, avant d'augmenter la température à 65°C, après avoir refermé le réacteur.

La phase dispersée, contenant les monomères hydrosolubles, est préparée en dissolvant le diol, l'agent de réticulation (triméthylolpropane), et le cas échéant le catalyseur (DABCO), dans 50 mL d'eau.

Cette dernière est alors dispersée dans la solution organique en l'introduisant rapidement dans le réacteur, où l'agitation a été préalablement enclenchée à 800 tr.min⁻¹, vitesse appropriée pour l'obtention de minicapsules dans ces conditions, pendant 5 minutes.

Pendant ce temps, une solution organique, contenant les monomères liposolubles, est préparée à partir de 50 mL de phase dispersante, dans laquelle sont dissous le diisocyanate, l'agent réticulant (DESMODUR® N100), et, le cas échéant le catalyseur KOSMOS® 29 (K29).

Une fois la dispersion réalisée, la vitesse d'agitation est abaissée à 200 tr.min⁻¹, vitesse optimum permettant un bon brassage du milieu réactionnel tout en évitant la détérioration des capsules. La solution organique contenant les monomères liposolubles est alors lentement introduite dans le réacteur à l'aide d'une seringue montée sur un pousse-seringue réglé pour permettre un débit d'addition d'environ 2,5 mUmin.
La réaction est alors laissée 4 heures pour permettre la réaction de polycondensation.

En fin de réaction, 450 mL de phase dispersante sont à nouveau introduits dans le réacteur afin de diluer les réactifs liposolubles n'ayant pas réagi, stoppant ainsi la réaction de polycondensation. En fait, la réaction n'est pas vraiment stoppée, mais considérablement ralentie.
Le réacteur est alors purgé, et la dispersion est filtrée sur papier filtre. Les minicapsules sont alors rincées plusieurs fois dans une solution organique de phase dispersante (préparée en début de manipulation), avant d'être essorées délicatement sur papier absorbant afin de retirer le maximum de solvant organique.

Enfin, les minicapsules sont lavées dans des solutions aqueuses contenant un tensioactif qui permet d'éviter l'agglomération des capsules et d'éliminer les dernières traces de solvant organique absorbé à la surface des capsules. Ces solutions aqueuses de lavage sont préparées à partir d'une solution mère de 1 L contenant 0,5% en volume de tensioactif (TWEEN® 20). Les lavages sont alors effectués avec des concentrations décroissantes en tensioactif, jusqu'à ce que l'odeur de solvant organique s'estompe. Les minicapsules sont alors conservées dans de l'eau.
On obtient ainsi des capsules à membrane polyuréthanne renfermant de l'eau et dont le diamètre moyen est compris entre 100 µm et 300 µm. Toute la phase est encapsulée avec un taux d'encapsulation voisin de 100%.

### Exemple 2 : Synthèse de minicapsules par polycondensation interfaciale en milieu dioxyde de carbone liquide

Le réacteur utilisé dans cet exemple (volume = 100 mL) est muni d'une ampoule à addition isobare d'un volume de 400 mL.

Dans le réacteur sont introduits 1,85 mmol de méthylène diphénylisocyanate, 0,55 mmol de DESMODUR^{®} N 100, et 500 mg de tensioactif KRYTOX^{®} 157 FSL, sous forme de sel d'ammonium. Le réacteur est alors fermé hermétiquement.

La solution aqueuse est ensuite préparée à partir de 5 mL d'eau, dans laquelle sont dissous 1,57 mmol de 1,5-pentanediol, 0,47 mmol de triméthylolpropane, et 23 mg de 1,4-diazabicyclo[2.2.2]octane (DABCO). Cette solution est introduite dans l'ampoule à addition.

L'ensemble (réacteur + ampoule isobare) est alors purgé 2 fois à 3 MPa de pression de dioxyde de carbone (CO₂) avant d'introduire 140 g de CO₂ (ou bien 70 g de CO₂ dans le réacteur uniquement lorsque l'ampoule est isolée).

L'agitation est enclenchée à 200 tr/min, et le chauffage est amené à la température de 30°C, ce qui facilite la dissolution des réactifs dans le CO₂. Lorsque la température est atteinte, l'agitation est augmentée jusqu'à 800 tr/min, et la phase dispersée contenue dans l'ampoule isobare est introduite rapidement.

Après 5 minutes de réaction, l'agitation est réduite à 200 tr/min, puis la réaction est laissée pendant une nuit (environ 16 heures) pour s'assurer que la totalité du monomère soit consommée.

En fin de réaction, l'agitation et le chauffage sont arrêtés, puis, lorsque le milieu réactionnel est revenu à température ambiante, la phase de dégazage est enclenchée : un détendeur, raccordé au réacteur, assure une pression constante de 100 kPa en sortie de celui-ci, laquelle est raccordée à un débitmètre. Le débit de sortie du gaz est fixé à 20 mL/min.

En fin de dégazage, la vanne de purge rapide est ouverte afin de s'assurer que le montage n'est plus sous pression. Le réacteur est alors ouvert et les produits de réaction sont alors récupérés.

On obtient des capsules composites formées d'un coeur d'eau et d'une membrane de polyuréthanne, les capsules ayant une taille (diamètre) moyenne comprise entre 100 µm et 300 µm.

### Exemple 3 : Synthèse de minicapsules par polycondensation interfaciale en milieu dioxyde de carbone supercritique

Le mode de préparation est identique à celui exposé dans l'exemple 2, mis à part le fait que, la dispersion étant réalisée dans le CO₂ liquide, c'est-à-dire à une température inférieure à 30°C, la température est ensuite amenée à la valeur désirée, afin que le CO₂ soit en phase supercritique, c'est-à-dire environ 60°C.

Les capsules ainsi obtenues sont formées d'un coeur d'eau et d'une membrane de polyuréthanne. Leur diamètre moyen est compris entre 100 µm et 300 µm.

## Revendications

1. Procédé de préparation de capsules composites par polycondensation interfaciale en milieu dispersé d'au moins deux monomères différents M₁ et M₂, **caractérisé en ce que** la dite polycondensation est réalisée dans un gaz à l'état liquide et/ou supercritique.

2. Procédé selon la revendication 1, **caractérisé en ce qu'**il il comprend les étapes suivantes :
a) ajouter à une solution comprenant un solvant S₂, une solution d'au moins un monomère M₁ dans un solvant S₁ contenant la substance à encapsuler, sous agitation, afin d'obtenir une dispersion stabilisée, S₁ ou S₂ étant un gaz à l'état liquide et/ou supercritique ;
b) ajouter à cette dispersion une solution comprenant au moins un monomère M₂ contenu dans une quantité minimum de S₂ ;
c) réaliser la polymérisation par polycondensation à l'interface des deux liquides ;
d) éliminer le gaz présent dans le milieu réactionnel ; et
e) extraire les capsules du milieu réactionnel.

3. Procédé selon la revendication 1 ou la revendication 2, dans lequel S₁ est le solvant de la phase lipophobe.

4. Procédé selon la revendication 1 ou la revendication 2, dans lequel S₁ est le solvant de la phase lipophile.

5. Procédé selon l'une quelconque des revendications 1 à 3 dans lequel S₁ est l'eau et S₂ est le gaz à l'état liquide et/ou supercritique.

6. Procédé selon l'une quelconque des revendications précédentes **caractérisé en ce que** le gaz est choisi parmi l'air, l'oxygène, l'azote, le protoxyde d'azote, le dioxyde de carbone, les gaz rares, les hydrocarbures halogénés ou non, et leurs mélanges en toutes proportions.

7. Procédé selon l'une quelconque des revendications précédentes **caractérisé en ce que** le gaz est non toxique pour l'homme, les animaux et/ou les plantes.

8. Procédé selon l'une quelconque des revendications précédentes **caractérisé en ce que** le gaz est le dioxyde de carbone.

9. Procédé selon l'une quelconque des revendications précédentes, dans lequel la dispersion comprend un agent tensioactif.

10. Procédé selon l'une quelconque des revendications précédentes, **caractérisé en ce que** la dispersion comprend un tensioactif permettant d'éviter l'agglomération entre elles de gouttelettes dispersées en croissance.

11. Procédé selon l'une des revendications 9 ou 10, dans lequel le tensioactif est un composé à chaînes polyfluorées.

12. Procédé selon la revendication 11, dans lequel le tensioactif est un composé à chaîne poly(oxyde de propylène) fluoré terminée par une fonction acide carboxylique.

13. Procédé selon l'une quelconque des revendications précédentes, **caractérisé en ce que** les monomères M₁ et M₂ sont des monomères bi-fonctionnels, tri-fonctionnels ou polyfonctionnels.

14. Procédé selon la revendication 13, **caractérisé en ce que** les monomères sont choisis, pour les monomères de la phase lipophobe, parmi les diamines et les diols, et, pour les monomères de la phase lipophile, parmi les dichlorures d'acide, les diisocyanates et les polyéthers fonctionnalisés en diisocyanate.

15. Procédé selon la revendication 14, **caractérisé en ce que** les monomères lipophobes sont choisis parmi les alcane-diols, comme le 1,4-butanediol ou le 1,5-pentanediol, les poly(oxydes d'éthylène glycol) (POEG) de diverses masses moléculaires et les alcane-polyols, par exemple les alcane-triols, et parmi les di- ou les poly-amines, par exemple la 1,6-hexaméthylène diamine, la 1,2-éthylènediamine et la tri-(2-aminoéthyl)amine.

16. Procédé selon la revendication 14, **caractérisé en ce que** les monomères de la phase lipophile sont choisis parmi les diisocyanates, par exemple le méthylène diphénylisocyanate (MDI), le 4,4'-dicyclohexylméthanediisocyanate (H₁₂MDI), le toluènediisocyanate (TDI), le poly(1,4-butanedioltoluènediisocyanate) (PBTDI), les polyisocyanates aliphatiques polyfonctionnels, et parmi les dichlorures d'acide, tels que le dichlorure de téréphtaloyle ou le dichlorure de sébacoyle.

17. Procédé selon l'une des revendications 1 à 16, **caractérisé en ce que** les monomères sont choisis parmi les diols en tant que monomères de la phase lipophobe et parmi les dichlorures d'acide en tant que monomères de la phase lipophile.

18. Procédé selon l'une des revendications 1 à 16, **caractérisé en ce que** les monomères sont choisis parmi les diols en tant que monomères de la phase lipophobe et parmi les diisocyanates en tant que monomères de la phase lipophile.

19. Procédé selon l'une des revendications 1 à 16, **caractérisé en ce que** les monomères sont choisis parmi les diamines en tant que monomères de la phase lipophobe et parmi les dichlorures d'acide en tant que monomères de la phase lipophile.

20. Procédé selon l'une des revendications 1 à 16, **caractérisé en ce que** les monomères sont choisis parmi les diamines en tant que monomères de la phase lipophobe et parmi les diisocyanates en tant que monomères de la phase lipophile.

21. Procédé selon l'une quelconque des revendications précédentes, **caractérisé en ce que** la réaction de polycondensation est conduite en présence d'un catalyseur de polycondensation.

## Claims

1. A method of preparing composite capsules by polycondensation at an interface in a dispersed medium of at least two different monomers M₁ and M₂, **characterised in that** the said polycondensation is carried out in a gas in a liquid and/or supercritical state.

2. Method according to claim 1, **characterised in that** it comprises the following steps:
a) adding to a solution comprising a solvent S₂, a solution of at least one monomer M₁ in a solvent S₁ containing the substance to be encapsulated, while stirring, in order to obtain a stabilised dispersion, S₁ or S₂ being a gas in a liquid and/or supercritical state;
b) adding to this dispersion a solution comprising at least one monomer M₂ contained in a minimum quantity of S₂;
c) carrying out the polymerisation by polycondensation at the interface of the two liquids;
d) eliminating the gas present in the reactive medium; and
e) extracting the capsules from the reactive medium.

3. Method according to claim 1 or claim 2, in which S₁ is the solvent of the lipophobic phase.

4. Method according to claim 1 or claim 2, in which S₁ is the solvent of the lipophilic phase.

5. Method according to any of claims 1 to 3, in which S₁ is water and S₂ is the gas in the liquid and/or supercritical state.

6. Method according to any of the preceding claims, **characterised in that** the gas is chosen from air, oxygen, nitrogen, nitrous oxide, carbon dioxide, the noble gases, halogenated or non-halogenated hydrocarbons, and their mixtures in any proportions.

7. Method according to any of the preceding claims, **characterised in that** the gas is non-toxic for humans, animals and/or plants.

8. Method according to any of the preceding claims, **characterised in that** the gas is carbon dioxide.

9. Method according to any of the preceding claims, in which the dispersion comprises a surfactant.

10. Method according to any of the preceding claims, **characterised in that** the dispersion comprises a surfactant avoiding agglomeration of the droplets dispersed during growth.

11. Method according to claim 9 or claim 10, in which the surfactant is a polyfluorinated chain compound.

12. Method according to claim 11, in which the surfactant is a compound of a fluorinated poly (propylene oxide) chain having a terminal carboxylic acid functional group.

13. Method according to any of the preceding claims, **characterised in that** the monomers M₁ and M₂ are bi-functional, tri-functional or polyfunctional monomers.

14. Method according to claim 13, **characterised in that** the monomers are chosen, for the monomers for the lipophobic phase, from diamines and diols, and, for the monomers of the lipophilic phase, from acid dichlorides, diisocyanates and polyethers having a diisocyanate functionality.

15. Method according to claim 14, **characterised in that** the lipophobic monomers are chosen from alkane-diols, such as 1,4-butanediol or 1,5-pentanediol, the poly(glycol ethylene oxides) (POEG) of various molecular masses and alkane-polyols, for example alkane-triols, and from the di- or poly-amines, for example 1,6-hexamethylene diamine, 1,2-ethylenediamine and tri-(2-aminoethyl)amine.

16. Method according to claim 14, **characterised in that** the monomers of the lipophilic phase are chosen from diisocyanates, for example methylene diphenylisocyanate (MDI), 4,4-dicyclohexylmethane-diisocyanate (H₁₂MDI), toluenediisocyanate (TDI), poly(1,4-butanedioltoluenediisocyanate) (PBTDI), polyfunctional aliphatic polyisocyanates, and from acid dichlorides, such as terephtaloyle dichloride or sebacoyle dichloride.

17. Method according to any of claims 1 to 16, **characterised in that** the monomers are chosen from diols as the monomers of the lipophobic phase and from acid dichlorides as monomers of the lipophilic phase.

18. Method according to any of claims 1 to 16, **characterised in that** the monomers are chosen from diols as the monomers of the lipophobic phase and from diisocyanates as monomers of the lipophilic phase.

19. Method according to any of claims 1 to 16, **characterised in that** the monomers are chosen from diamines as monomers of the lipophobic phase and from acid dichlorides as monomers of the lipophilic phase.

20. Method according to any of claims 1 to 16, **characterised in that** the monomers are chosen from diamines as monomers of the lipophobic phase and from diisocyanates as monomers of the lipophilic phase.

21. Method according to any of the preceding claims, **characterised in that** the polycondensation reaction is carried out in the presence of a polycondensation catalyst.

## Patentansprüche

1. Verfahren zur Herstellung von Kompositkapseln durch Grenzflächen-Polykondensation von mindestens zwei verschiedenen Monomeren M₁ und M₂ in einem dispergierten Medium, **dadurch** charakterisiert, dass die Polykondensation in einem Gas im flüssigen und/oder überkritischen Zustand durchgeführt wird.

2. Verfahren nach Anspruch 1, **dadurch** charakterisiert, dass es die folgenden Schritte umfasst:
a) Zugabe einer Lösung von mindestens einem Monomer M₁ in einem Lösungsmittel S₁, das die einzukapselnde Substanz enthält, unter Rühren zu einer Lösung, die ein Lösungsmittel S₂ umfasst, um eine stabilisierte Dispersion zu erhalten, wobei S₁ oder S₂ ein Gas im flüssigen und/oder überkritischen Zustand ist;
b) Zugabe einer Lösung, die mindestens ein Monomer M₂ enthält, das in einer minimalen Menge S₂ enthalten ist, zu dieser Dispersion;
c) Durchführung einer Polymerisation durch Grenzflächenpolykondensation der beiden Flüssigkeiten;
d) Entfernen des im Reaktionsmedium vorhandenen Gases; und
e) Extrahieren der Kapseln aus dem Reaktionsmedium.

3. Verfahren nach Anspruch 1 oder Anspruch 2, wobei S₁ das Lösungsmittel der lipophoben Phase ist.

4. Verfahren nach Anspruch 1 oder Anspruch 2, wobei S₁ das Lösungsmittel der liphophilen Phase ist.

5. Verfahren nach einem der Ansprüche 1 bis 3, wobei S₁ Wasser ist und S₂ das Gas im flüssigen und/oder überkritischen Zustand ist.

6. Verfahren nach einem der vorstehenden Ansprüche, **dadurch** charakterisiert, dass das Gas ausgewählt wird aus Luft, Sauerstoff, Stickstoff, Distickstoffoxid, Kohlendioxid, Edelgasen, halogenierten oder nicht halogenierten Kohlenwasserstoffen, und ihren Mischungen in allen Verhältnissen.

7. Verfahren nach einem der vorstehenden Ansprüche, **dadurch** charakterisiert, dass das Gas für Menschen, Tiere und/oder Pflanzen nicht giftig ist.

8. Verfahren nach einem der vorstehenden Ansprüche, **dadurch** charakterisiert, dass das Gas Kohlendioxid ist.

9. Verfahren nach einem der vorstehenden Ansprüche, wobei die Dispersion ein oberflächenaktives Mittel umfasst.

10. Verfahren nach einem der vorstehenden Ansprüche, **dadurch** charakterisiert, dass die Dispersion einen oberflächenaktiven Stoff umfasst, der ermöglicht, die Agglomeration der dispergierten Tröpfchen untereinander beim Wachstum zu vermeiden.

11. Verfahren nach einem der Ansprüche 9 oder 10, wobei der oberflächenaktive Stoff eine Verbindung mit polyfluorierten Ketten ist.

12. Verfahren nach Anspruch 11, wobei der oberflächenaktive Stoff eine Verbindung mit einer fluorierten Poly(proylenoxid)kette ist, die durch eine Carbonsäurefunktion terminiert ist.

13. Verfahren nach einem der vorstehenden Ansprüche, **dadurch** charakterisiert, dass die Monomere M₁, und M₂ bifunktionelle, trifunktionelle oder polyfunktionelle Monomere sind.

14. Verfahren nach Anspruch 13, **dadurch** charakterisiert, dass die Monomere für die lipophobe Phase aus Diaminen und Diolen ausgewählt werden, und die Monomere der lipophilen Phase aus Säuredichloriden, Diisocyanaten und mit Diisocyanat funktionalisierten Polyethern.

15. Verfahren nach Anspruch 14, **dadurch** charakterisiert, dass die lipophoben Monomere ausgewählt werden aus Alkandiolen, wie 1,4-Butandiol oder 1,5-Pentandiol, Poly(ethylenglycoloxiden) (POEG) verschiedener Molekülmassen und Alkanpolyolen, beispielsweise Alkantriolen, und aus Di- oder Polyaminen, beispielsweise 1,6-Hexamethylendiamin, 1,2-Ethylendiamin und Tri-(2-Aminoethyl)amin.

16. Verfahren nach Anspruch 14, **dadurch** charakterisiert, dass die Monomere der lipophilen Phase ausgewählt werden aus Diisocyanaten, beispielsweise Methylendiphenylisocyanat (MDI), 4,4'-Dicyclohexyl-methandiisocyanat (H₁₂MDI), Toluoldiisocyanat (TDI), Poly(1,4-Butandiol-toluoldiisocyanat) (PBTDI), polyfunktionellen aliphatischen Diisocyanaten und aus Säuredichloriden wie Terephtaloyldichlorid oder Sebacoyldicshlorid.

17. Verfahren nach einem der Ansprüche 1 bis 16, **dadurch** charakterisiert, dass die Monomere ausgewählt werden aus Diolen als Monomere der lipophoben Phase und aus Säuredichloriden als Monomere der lipophilen Phase.

18. Verfahren nach einem der Ansprüche 1 bis 16, **dadurch** charakterisiert, dass die Monomere ausgewählt werden aus Diolen als Monomeren der lipophoben Phase und Diisocyanaten als Monomeren der lipophilen Phase.

19. Verfahren nach einem der Ansprüche 1 bis 16, **dadurch** charakterisiert, dass die Monomere ausgewählt werden aus Diaminen als Monomeren der lipophoben Phase und Säuredichloriden als Monomeren der lipophilen Phase.

20. Verfahren nach einem der Ansprüche 1 bis 16, **dadurch** charakterisiert, dass die Monomere ausgewählt werden aus Diaminen als Monomeren der lipophoben Phase und aus Diisocyanaten als Monomeren der lipophilen Phase.

21. Verfahren nach einem der vorstehenden Ansprüche, **dadurch** charakterisiert, dass die Polykondensationsreaktion in Gegenwart eines Polykondensationskatalysators durchgeführt wird.
